# FASCICULE DE BREVET EUROPEEN

(11) **EP 1 702 183 B1**
(45) Date de publication et mention de la délivrance du brevet: **27.06.2007**
(21) Numéro de dépôt: 04817409.8
(22) Date de dépôt: 13.10.2004
(51) Int. Cl.: F25B 21/00

(54) **DISPOSITIF DE GENERATION DE FLUX THERMIQUE A MATERIAU MAGNETO-CALORIQUE**
VORRICHTUNG ZUR ERZEUGUNG VON THERMISCHEM FLUSS MIT MAGNETOKALORISCHEM MATERIAL
DEVICE FOR GENERATING A THERMAL FLUX WITH MAGNETO-CALORIC MATERIAL

(30) Priorité: 23.10.2003 FR 0312424
(43) Date de publication de la demande: 20.09.2006
(73) Titulaire: Cooltech Applications, 68280 Andolsheim (FR)
(72) Inventeur: Muller, Christian, 67000 Strasbourg (FR); Dupin, Jean-Louis, 68320 Muntzenheim (FR); Heitzler, Jean-Claude, 68180 Horbourg-Wihr (FR)
(74) Mandataire: Nithardt, Roland
(86) Numéro de dépôt international: PCT/FR2004/002600
(87) Numéro de publication internationale: WO 2005/043052

(56) Documents cités:
- WO-A-03/050456
- FR-A- 2 601 440
- KIROL L D ET AL: "ROTARY RECUPERATIVE MAGNETIC HEAT PUMP" ADVANCES IN CRYOGENIC ENGINEERING. ST. CHARLES, ILLINOIS, 14 - 18 JUNE, 1987, PROCEEDINGS OF THE CRYOGENIC ENGINEERING CONFERENCE, NEW YORK, PLENUM PRESS, US, vol. 33, 1988, pages 757-765, XP002047554

## Description

### Domaine technique :

La présente invention concerne un dispositif de génération de flux thermique à matériau magnéto-calorique comportant au moins une unité de génération de flux thermique pourvue d'au moins deux organes thermiques contenant chacun au moins un élément magnéto-calorique, des moyens magnétiques agencés pour émettre au moins un champ magnétique, des moyens de déplacement couplés aux moyens magnétiques pour les déplacer par rapport aux éléments magnéto-caloriques afin de les soumettre à une variation ou à une annulation de champ magnétique de manière à faire varier leur température et des moyens de récupération des calories et/ou frigories émises par ces éléments magnéto-caloriques.

### Technique antérieure :

Les dispositifs conventionnels de génération du froid comportent habituellement un compresseur pour comprimer un fluide réfrigérant afin d'élever sa température et des moyens de détente pour décompresser ce fluide réfrigérant afin de le refroidir de manière adiabatique. Ces dispositifs conventionnels engendrent de multiples inconvénients. En effet, les gaz tels que les CFC (chlorofluorocarbones)couramment utilisés comme fluide réfrigérant sont extrêmement polluants et leur utilisation comporte des risques importants de pollution atmosphérique et de destruction de la couche d'ozone. De ce fait, ces gaz ne répondent plus aux exigences actuelles ni aux normes de nombreux pays en matière d'environnement. De plus, ces appareils conventionnels qui fonctionnent sous pression imposent que leur installation et maintenance soient effectuées par un personnel qualifié et certifié, devant suivre des procédures contraignantes dont le déroulement nécessite des temps d'intervention longs et répétés. Enfin, ces appareils conventionnels sont bruyants, ils génèrent de nombreuses vibrations, ils sont encombrants, complexes et grands consommateurs d'énergie électrique. Ces dispositifs conventionnels ne sont donc pas satisfaisants.

Les efforts de recherche ont permis d'identifier des matériaux magnéto-caloriques pouvant être utilisés dans des installations de tempérage et/ou de refroidissement. L'effet magnéto-calorique est la propriété que possèdent certains matériaux de s'échauffer sous l'effet d'un champ magnétique et de se refroidir à une température inférieure à leur température initiale après disparition du champ magnétique ou suite à une variation de ce champ magnétique.

Une première technologie, basée sur l'utilisation d'assemblages magnétiques supraconducteurs de grande taille, est utilisée dans des laboratoires et dans le domaine de la recherche nucléaire pour parvenir à des températures proches du zéro absolu.

On connaît en particulier le brevet US-A-4.674.288 qui décrit un dispositif de liquéfaction de l'hélium comprenant une substance magnétisable mobile dans un champ magnétique généré par une bobine supraconductrice et un réservoir contenant de l'hélium et en conduction thermique avec ladite bobine supraconductrice. Le mouvement de translation de la substance magnétisable génère du froid qui est transmis à l'hélium par l'intermédiaire d'éléments conducteurs. L'utilisation de matériau supraconducteur nécessite des installations de refroidissement à l'azote liquide, volumineuses, coûteuses et qui requièrent des opérations de maintenance délicates. Ces dispositifs sont complexes et ne peuvent être utilisés que pour des applications limitées. Cette solution n'est donc pas satisfaisante.

La publication FR-A-2 525 748 a pour objet un dispositif de réfrigération magnétique comprenant une matière magnétisable, un système de génération d'un champ magnétique variable et des moyens de transfert de la chaleur et du froid comportant une chambre remplie d'un réfrigérant liquide saturé. Dans une première position, la matière magnétisable génère du froid et les moyens de transfert de froid extraient le froid de la matière magnétisable par condensation d'un réfrigérant. Dans une seconde position, la matière magnétisable génère de la chaleur et les moyens de transfert de chaleur extraient la chaleur de la matière magnétisable par ébullition ou par échauffement d'un autre réfrigérant. L'efficacité globale de tels systèmes est extrêmement faible et ne peut pas rivaliser avec les systèmes de réfrigération actuels en terme de rendement. Cette solution n'est donc pas économiquement satisfaisante.

Des études menées aux États-Unis d'Amérique ont permis de mettre au point un nouveau procédé de génération de flux thermique utilisant un matériau magnéto-calorique. En passant devant le champ magnétique, les moments magnétiques du matériau magnéto-calorique s'alignent, ce qui provoque un réarrangement des atomes générant l'échauffement du matériau magnéto-calorique. Hors du champ magnétique, le processus s'inverse et le matériau magnéto-calorique se refroidit jusqu'à atteindre une température inférieure à sa température initiale. Un premier matériau à base de gadolinium a été développé. Ce matériau, efficace à température ambiante, présente l'inconvénient d'être coûteux et difficile à obtenir pour cette application. Des alliages moins onéreux et plus faciles à obtenir sont actuellement en cours d'étude.

Une équipe de chercheurs américains a développé et mis au point un prototype permettant de valider les résultats théoriques des recherches sur le gadolinium. Ce prototype comporte un disque formé de secteurs contenant un alliage de gadolinium. Le disque est guidé en rotation continue autour de son axe de manière à faire défiler ses secteurs dans un champ magnétique créé par un aimant permanent fixe. Cet aimant permanent chevauche les secteurs du disque. En regard de l'aimant permanent, le disque passe dans un bloc de transfert thermique comportant un circuit de fluide caloporteur destiné à transporter les calories et/ou les frigories générées par le gadolinium soumis alternativement à la présence et à l'absence du champ magnétique.

Le bloc de transfert thermique peut être conçu de deux manières. Selon une première forme de réalisation, le bloc de transfert thermique est dit "aveugle" et le circuit le traverse sans que le fluide caloporteur ne soit en contact direct avec le disque. Dans ce premier cas, le rendement des échanges thermiques est très faible et le dispositif énergétiquement non rentable. Selon une seconde forme de réalisation, le bloc de transfert thermique comporte des orifices d'entrée et de sortie débouchant sur le disque en rotation et permettant au fluide caloporteur d'être en contact avec le disque. Dans ce second cas, il est très difficile, même en utilisant des joints tournants, d'assurer l'étanchéité entre le disque et le bloc de transfert thermique sans pénaliser le rendement global du dispositif. Cette solution n'est donc pas satisfaisante.

La publication WO-A-03/050456 décrit également un dispositif de réfrigération magnétique à matériau magnéto-calorique similaire utilisant deux aimants permanents. Ce dispositif comporte une enceinte annulaire monobloc délimitant douze compartiments magnéto-caloriques séparés par des joints et recevant chacun du gadolinium sous forme poreuse. Chaque compartiment est pourvu au minimum de quatre orifices dont un orifice d'entrée et un orifice de sortie reliés à un circuit chaud et un orifice d'entrée et un orifice de sortie reliés à un circuit froid. Les deux aimants permanents sont animés d'un mouvement de rotation continue de sorte qu'ils balayent successivement les différents compartiments magnéto-caloriques fixes en les soumettant successivement à un champ magnétique différent. Les calories et/ou frigories émises par le gadolinium des différents compartiments sont guidées vers des échangeurs de chaleur par des circuits chaud et froid de fluide caloporteur auxquels ils sont successivement raccordés par l'intermédiaire de joints tournants dont la rotation est couplée par une ou plusieurs courroies à l'axe d'entraînement en rotation continue des deux aimants. Ainsi, le conduit de fluide caloporteur traversant les compartiments magnéto-caloriques fixes est successivement raccordé aux circuits chaud et froid par des joints rotatifs. Ce dispositif, qui simule ainsi le fonctionnement d'un anneau liquide, nécessite une rotation en continue et synchrone précise des différents joints rotatifs et des aimants permanents, le rendant techniquement difficile et coûteux à réaliser. Son principe de fonctionnement en continu rend ses perspectives d'évolution technique très limitées. De plus, la construction de ce dispositif ne permet pas l'utilisation d'un nombre supérieur de compartiments magnéto-caloriques sans le rendre économiquement non rentable et techniquement non fiable. Enfin, l'utilisation de joints rotatifs ne permet pas de garantir une bonne étanchéité et réduit la durée de vie de ce dispositif.

La publication FR-A-2 601 440 décrit un appareil et un procédé de réfrigération magnétiques utilisant une substance magnéto-calorique qui se présente sous la forme d'un disque magnéto-calorique, mobile en rotation par rapport à un anneau magnétique fixe générant le champ magnétique. Le disque magnéto-calorique étant mobile en rotation, il est difficile de garantir l'étanchéité entre les conduits transportant le fluide caloporteur et les circuits thermiques chaud et froid externes qui sont fixes.

La publication XP 002047554 intitulée "Rotary recuperative magnetic heat pump" décrit une pompe à chaleur comportant un rotor magnétique fixe et des disques magnéto-caloriques mobiles de faible épaisseur comportant un matériau magnéto-calorique tel que le Gadolinium. La variation de champ magnétique est obtenue par rotation continue ou alternative des disques magnéto-caloriques. Dans ce cas, le fonctionnement est similaire au précédent et présente les mêmes inconvénients.

### Exposé de l'invention :

La présente invention se propose de pallier ces inconvénients en offrant un dispositif de génération de flux thermique non polluant, efficace, fiable, de conception simple tout en pouvant accepter un nombre important d'organes thermiques, évolutif, flexible, modulaire, peu onéreux, dont les opérations d'installation et de maintenance peuvent être réalisées par un personnel sans qualification spécifique, faible consommateur d'énergie électrique, dont le volume est optimisé, ayant un bon rendement, ne nécessitant qu'une quantité limitée de matériau magnéto-calorique et pouvant être utilisé dans des installations industrielles de grande échelle ainsi que pour des applications domestiques.

Dans ce but, l'invention concerne un dispositif de génération de flux thermique à matériau magnéto-calorique du genre indiqué en préambule, caractérisé en ce que les moyens de déplacement sont alternatifs et agencés pour déplacer les moyens magnétiques par rapport aux éléments magnéto-caloriques selon un mouvement alternatif qui peut être choisi dans le groupe comprenant au moins un pivotement, un pivotement combiné à une translation tel qu'un mouvement hélicoïdal, une translation rectiligne, circulaire, sinusoïdale ou suivant toute autre trajectoire adaptée.

Selon une forme de réalisation préférée, les moyens de récupération comportent au moins un circuit de fluide caloporteur, des moyens de circulation de ce fluide caloporteur dans le ou les circuits et des moyens d'évacuation des calories et/ou frigories récupérées par le ou les fluides caloporteurs, le circuit comportant au moins deux zones de transfert situées chacune dans l'environnement immédiat de l'un des éléments magnéto-caloriques et agencées pour que le fluide caloporteur récupère au moins en partie les calories et/ou frigories émises par l'élément magnéto-calorique correspondant.

Les moyens de récupération peuvent comporter des moyens d'inversion du sens de circulation du fluide caloporteur dans le circuit de fluide caloporteur.

Les moyens de récupération comportent de préférence au moins deux circuits de fluide caloporteur dont au moins un "circuit chaud" pour les calories et au moins un "circuit froid" pour les frigories et des moyens de commutation agencés pour raccorder alternativement chaque zone de transfert à l'un ou l'autre des circuits de fluide caloporteur.

De manière avantageuse, le dispositif comporte des moyens de synchronisation agencés pour synchroniser les moyens de déplacement alternatifs aux moyens de commutation de sorte que, selon le champ magnétique auquel est soumis chaque élément magnéto-calorique, la zone de transfert correspondante est reliée à l'un ou l'autre des circuits de fluide caloporteur.

L'élément magnéto-calorique comporte avantageusement au moins l'un des matériaux magnéto-calorique choisi dans le groupe comprenant au moins le gadolinium (Gd), un alliage de gadolinium comportant au moins l'un des matériaux choisi dans le groupe comprenant au moins le silicium (Si), le germanium (Ge), le fer (Fe), le magnésium (Mg), le phosphore (P), l'arsenic (As), le matériau magnéto-calorique se présentant sous l'une des formes choisie dans le groupe comprenant un bloc, une pastille, de la poudre, un agglomérat de morceaux. L'utilisation de matériaux magnéto-caloriques ayant des plages de températures différentes permet d'obtenir une vaste gamme de puissances et de températures.

Chaque organe thermique est avantageusement au moins en partie réalisé dans un matériau conducteur choisi pour sa bonne conduction thermique et choisi dans le groupe comprenant au moins le cuivre, les alliages de cuivre, l'aluminium, les alliages d'aluminium, les aciers, les alliages d'acier, les inoxydables et les alliages d'inoxydable.

De manière préférentielle, l'un au moins des organes thermiques comporte au moins un conduit traversant pourvu d'au moins un orifice d'entrée et d'au moins un orifice de sortie raccordés au circuit de fluide caloporteur, le conduit traversant définissant la zone de transfert correspondante.

De manière particulièrement avantageuse, l'un au moins des organes thermiques comporte un conduit traversant unique pourvu d'un orifice d'entrée unique et d'un orifice de sortie unique raccordés au circuit, le conduit traversant définissant la zone de transfert correspondante.

Les moyens magnétiques comportent de préférence au moins un élément magnétique pourvu d'au moins un aimant permanent.

Cet élément magnétique peut comporter au moins un matériau magnétisable agencé pour concentrer et diriger les lignes de champ de l'aimant permanent, ce matériau magnétisable étant choisi dans le groupe comprenant au moins le fer (Fe), le cobalt (Co), le fer doux, le vanadium (V), un assemblage de ces matériaux.

L'élément magnétique a de préférence une forme en U ou en C agencée pour recevoir entre ses branches et de manière alternative l'élément magnéto-calorique. En fonction du champ magnétique à générer, la forme de l'élément magnétique pourra être différente et optimisée.

Les organes thermiques sont avantageusement indépendants et séparés par au moins un élément thermiquement isolant choisi dans le groupe comprenant au moins un espace, un matériau isolant. Il peut également comporter plusieurs éléments magnétiques portés par un support couplé aux moyens de déplacement alternatifs.

Selon une première forme de réalisation, le support est sensiblement circulaire et définit au moins un anneau monté pivotant alternativement sur son axe, cet anneau portant radialement les moyens magnétiques et, les organes thermiques définissant des secteurs circulaires disposés sensiblement en cercle de manière consécutive pour pouvoir être chevauchés librement par les moyens magnétiques.

Dans cette configuration, les moyens magnétiques peuvent être orientés de manière à ce que les fentes des formes en U ou en C soient sensiblement parallèles ou perpendiculaires à l'axe de pivotement de l'anneau et, les organes thermiques peuvent être orientés respectivement sensiblement parallèlement ou perpendiculairement à l'axe de pivotement du support.

Selon une seconde forme de réalisation, le support est sensiblement rectiligne et définit au moins une barre, mobile en translation rectiligne alternative, la barre portant les moyens magnétiques, et les organes thermiques étant portés par au moins un cadre entourant la barre et disposés sensiblement en ligne pour être chevauchés librement par les moyens magnétiques.

Dans cette configuration, les moyens magnétiques peuvent être disposés en quinconce de part et d'autre de la barre pour définir deux rangées et le cadre peut comporter deux séries d'organes thermiques dont chacune correspond aux moyens magnétiques d'une des rangées.

Une partie des organes thermiques est avantageusement portée par au moins une platine comportant au moins des orifices de communication pour le passage du fluide caloporteur vers le circuit de fluide caloporteur.

Les moyens de circulation sont choisis avantageusement dans le groupe comprenant au moins une pompe, un circulateur, une circulation par thermosiphon.

Les moyens d'évacuation comportent de préférence au moins deux échangeurs dont au moins un échangeur de calories relié au "circuit chaud" et au moins un échangeur de frigories relié au "circuit froid".

Les moyens d'entraînement alternatifs peuvent être choisis dans le groupe comprenant au moins un moteur, un vérin, un mécanisme à ressort, un aérogénérateur, un électroaimant, un hydrogénérateur.

Le dispositif comporte avantageusement plusieurs unités de génération de flux thermique raccordées en série, en parallèle ou selon une combinaison série-parallèle.

### Description sommaire des dessins :

La présente invention et ses avantages apparaîtront mieux dans la description suivante de plusieurs modes de réalisation, donnés à titre d'exemples non limitatifs en référence aux dessins annexés, dans lesquels :
- la figure 1 est une vue en perspective éclatée d'un dispositif de l'invention selon un premier mode de réalisation,
- la figure 2 est une vue en coupe de coté d'un organe thermique du fluide caloporteur du dispositif de la figure 1,
- les figures 3A-B sont des vues en perspective respectivement de dessous et de dessus du dispositif de la figure 1,
- les figures 4A-C sont respectivement des vues en perspective éclatée, de dessus et de dessous d'un dispositif de l'invention selon un second mode de réalisation,
- les figures 5A-C sont des vues en perspective respectivement éclatée et non éclatée d'un dispositif de l'invention selon deux étapes de fonctionnement d'un troisième mode de réalisation, et
- les figures 6A-B sont des schémas illustrant de manière simplifiée le mode de fonctionnement d'un dispositif selon l'invention.

### Meilleure manière de réaliser l'invention :

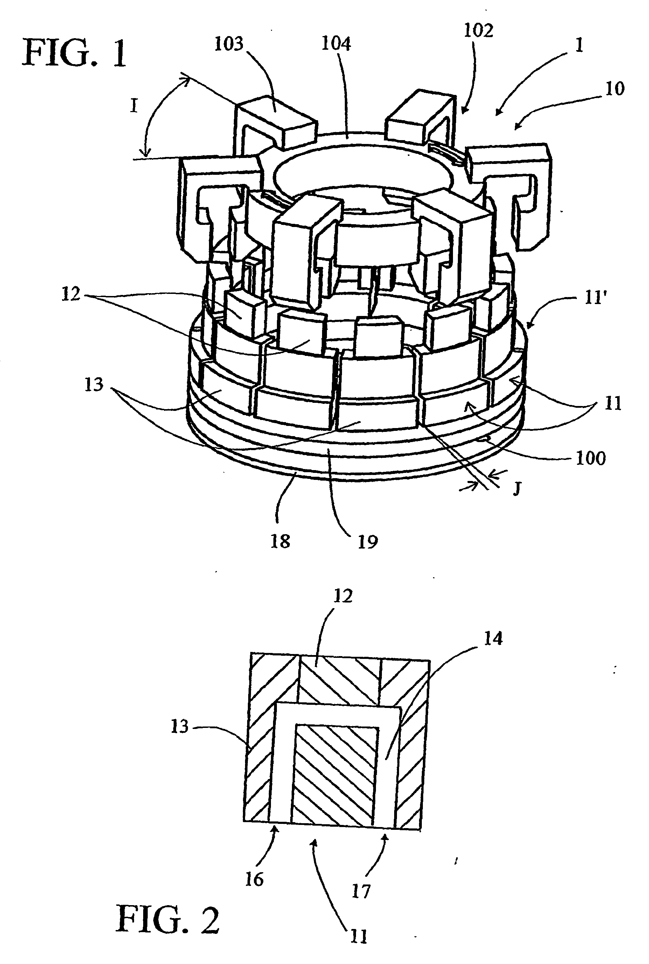

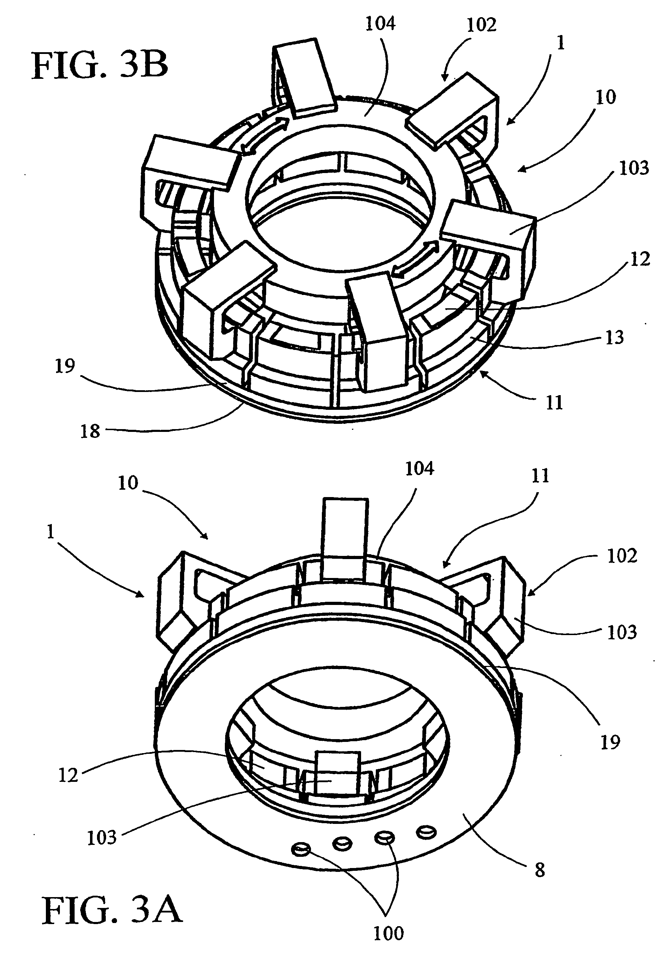

En référence aux figures 1, 2, 3A-B, et selon un premier mode de réalisation de l'invention, le dispositif 1 de génération de flux thermique à matériau magnéto-calorique, appelé dans la suite de la description "le dispositif', comporte une unité de génération de flux thermique 10 pourvue de douze organes thermiques 11 définissant chacun un secteur circulaire. Chaque organe thermique 11 forme un élément mécanique indépendant adaptable selon les besoins. Ces organes thermiques 11 sont disposés de manière consécutive pour former sensiblement un cercle et sont séparés deux à deux par un ou plusieurs éléments thermiquement isolants tel que par exemple un espace J, un matériau isolant ou tout autre moyen équivalent.

Les organes thermiques 11 contiennent un élément magnéto-calorique 12 réalisé en matériau magnéto-calorique tel que par exemple du gadolinium (Gd), un alliage de gadolinium contenant par exemple du silicium (Si), du germanium (Ge), du fer (Fe), du magnésium (Mg), du phosphore (P), de l'arsenic (As) ou tout autre matériau ou alliage magnétisable équivalent. Le choix entre les matériaux magnéto-caloriques se fait en fonction des puissances caloriques et frigorifiques recherchées et des plages de températures nécessaires. De même, la quantité de matériau magnéto-calorique utilisée dans l'organe thermique 11 dépend des puissances calorique et frigorifique installées, de la plage de températures de fonctionnement, de la puissance installée du champ magnétique et de la nature même du matériau magnéto-calorique. Pour information, il est par exemple possible d'obtenir 160 watts frigorifiques avec 1 kg de gadolinium, un champ magnétique de 1,5 Tesla, une plage de température de 33°C et un cycle de 4 secondes, ce cycle comportant les phases successives d'exposition au champ magnétique et de non-exposition.

Dans cet exemple, l'élément magnéto-calorique 12 se présente sous la forme d'un secteur circulaire et chaque organe thermique 11 comporte un élément thermiquement conducteur 13 prolongeant latéralement l'élément magnéto-calorique 12. L'élément thermiquement conducteur 13 est réalisé en un matériau conducteur choisi pour sa bonne conduction thermique tel que par exemple le cuivre, les alliages de cuivre, l'aluminium, les alliages d'aluminium, les aciers, les alliages d'acier, les inoxydables, les alliages d'inoxydables, ou tout autre matériau équivalent. Ainsi, lorsque l'élément magnéto-calorique 12 s'échauffe ou se refroidit sous l'effet de la variation de champ magnétique, il transmet une partie de ses calories ou frigories à l'élément thermiquement conducteur 13 qui s'échauffe ou se refroidit rapidement, augmentant d'autant la capacité d'absorption thermique de l'organe thermique 11. La géométrie des organes thermiques 11 favorise ainsi une grande surface de contact avec les éléments magnétiques 103 décrits plus loin. De manière générale, le matériau magnéto-calorique peut se présenter sous la forme d'un bloc, d'une pastille, de poudre, d'un agglomérat de morceaux ou de toute autre forme adaptée. L'élément magnéto-calorique 12 peut comporter plusieurs matériaux magnéto-caloriques, par exemple plusieurs plaques disposées côte à côte.

Chaque organe thermique 11 comporte une zone de transfert 14 traversée par le fluide caloporteur à réchauffer ou à refroidir. Cette zone de transfert 14, illustrée par la figure 2A, est formée d'un conduit traversant débouchant du même côté, dans cet exemple, sur une paroi 15 sensiblement plane de l'organe thermique 11 par un orifice d'entrée 16 et par un orifice de sortie 17. Il est bien entendu possible de prévoir que pour tout ou partie des organes thermiques 11, les orifices d'entrée 16 et de sortie 17 sont répartis sur deux, voire sur un nombre supérieur de parois 15, ces parois 15 étant toutes planes ou non.

Les organes thermiques 11 sont fixés, en appui sur leur paroi 15 comportant les orifices d'entrée 16 et de sortie 17, sur une platine 18 réalisée en un matériau mécaniquement rigide. En regard de la platine 18, les organes thermiques 11 sont pourvus d'épaulements 11' augmentant leur section pour faciliter leur montage sur la platine 18 et améliorer les échanges thermiques avec le fluide caloporteur. La platine 18 et les organes thermiques 11 sont séparés par un joint thermique 19. Ce joint thermique 19 et la platine 18 comportent des orifices de communication 100 permettant le passage du fluide caloporteur. Les orifices de communication 100 sont pourvus de raccords (non représentés) pour raccorder les orifices d'entrée 16 et de sortie 17 des zones de transfert 14 des différents organes thermiques 11 à un ou plusieurs circuits externes pourvus d'échangeurs thermiques, non représentés sur ces figures. Ces circuits externes sont par exemple formés de conduits rigides ou souples rempli chacun d'un fluide caloporteur identique ou différent. Le ou les circuits externes et les zones de transfert 14 définissent le ou les circuits de fluide caloporteur.

Chaque circuit de fluide caloporteur comporte des moyens de circulation forcée ou libre du fluide caloporteur, non représentés sur ces figures, tels que par exemple une pompe, ou tout autre moyen équivalent. La composition chimique du fluide caloporteur est adaptée à la plage de températures voulue et choisie pour obtenir un échange thermique maximal. On utilisera par exemple de l'eau pure pour des températures positives et de l'eau additionnée d'antigel, par exemple un produit glycolé, pour des températures négatives. Ce dispositif 1 permet ainsi de s'affranchir de l'utilisation de tout fluide corrosif ou nocif pour l'homme et/ou son environnement. Chaque circuit de fluide caloporteur est en outre pourvu de moyens d'évacuation, non représentés sur ces figures, tels que par exemple des échangeurs ou tout autre moyen équivalent permettant la diffusion des calories et des frigories.

Les moyens magnétiques 102 du dispositif 1 comportent des éléments magnétiques 103 pourvus chacun d'un ou de plusieurs aimants permanents pleins, frittés ou feuilletés, associés à un ou plusieurs matériaux magnétisables concentrant et dirigeant les lignes de champ magnétique de l'aimant permanent. Les matériaux magnétisables peuvent contenir du fer (Fe), du cobalt (Co), du Vanadium (V), du fer doux, un assemblage de ces matériaux ou tout matériau équivalent. Par ailleurs, il est bien entendu que tout autre type d'aimant équivalent tel qu'un électro-aimant, un supraconducteur peut être utilisé. Néanmoins, l'aimant permanent présente des avantages certains en terme de dimensionnement, de simplicité d'utilisation, de faible consommation d'énergie électrique, et de faible coût.

Les éléments magnétiques 103 sont portés par un support 104 mobile. Dans cet exemple, le dispositif 1 comporte six éléments magnétiques 103 disposés sensiblement en cercle, de manière consécutive, et distants deux à deux d'un intervalle I. Ces éléments magnétiques 103 ont une forme en U ou en C dont l'écartement des branches permet le passage libre des organes thermiques 11. Les éléments magnétiques 103 sont fixés radialement à un support sensiblement circulaire définissant un anneau 104. Cet anneau 104 est monté pivotant sur son axe entre deux positions et couplé à des moyens d'entraînement alternatifs non représentés faisant passer alternativement l'anneau 104 d'une position à l'autre. Les moyens d'entraînement alternatifs sont par exemple un moteur, un vérin, un mécanisme à ressort, un aérogénérateur, un électroaimant, un hydrogénérateur ou tout autre moyen équivalent. Par rapport aux mouvements continus ou pas à pas, le mouvement de pivotement alternatif présente l'avantage de pouvoir être obtenu par des moyens d'entraînement alternatifs simples et peu coûteux. De plus, ce mouvement alternatif ne nécessite que deux positions d'où un fonctionnement simplifié, une course de déplacement limitée et facilement maîtrisable.

Les éléments magnétiques 103 sont engagés au-dessus d'une partie des organes thermiques 11 de sorte que ces derniers sont chevauchés et encadrés de part et d'autre par les branches des éléments magnétiques 103. Le nombre d'organes thermiques 11 étant égal au double de celui des éléments magnétiques 103, lors du pivotement alternatif des éléments magnétiques 103 par rapport aux organes thermiques 11, les organes thermiques 11 sont successivement en regard ou non d'un élément magnétique 103.

Dans cet exemple, les organes thermiques 11 sont orientés sensiblement parallèlement à l'axe de pivotement de l'anneau 104 et les éléments magnétiques 103 sont orientés pour que leur fente soit sensiblement parallèle à ce même axe de pivotement.

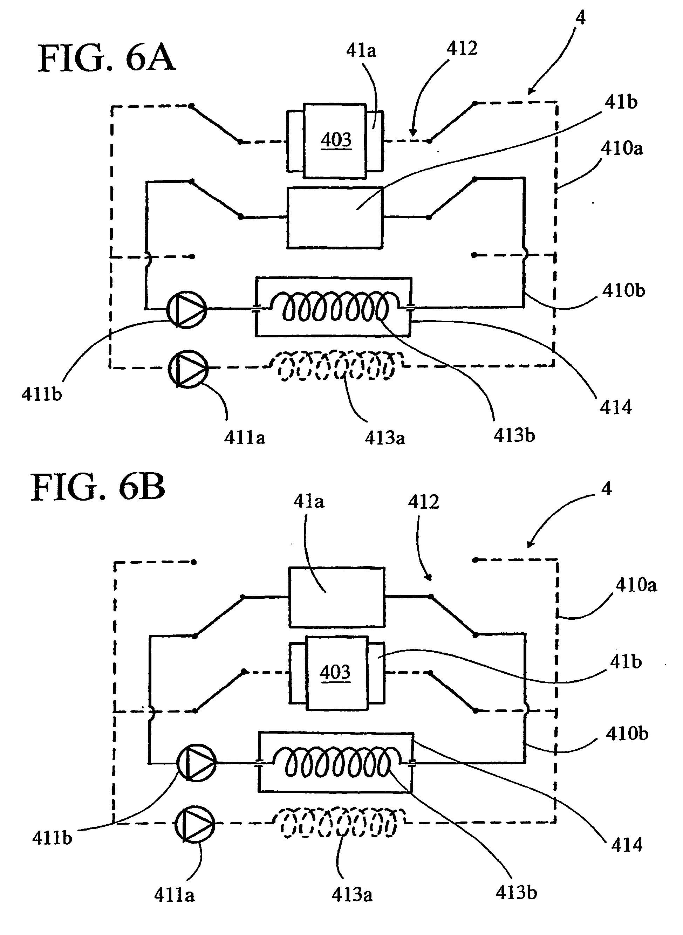

Comme décrit ultérieurement en référence aux figures 6A-B, le dispositif 1 comporte des moyens de commutation et des moyens de synchronisation. Ainsi, dans une première étape, le fluide caloporteur chauffé par un organe thermique 11 soumis à un champ magnétique circule dans un "circuit chaud" vers un échangeur de calories. Dans une seconde étape, le fluide caloporteur refroidit par l'organe thermique 11 soumis à l'absence de champ magnétique ou par la présence d'un champ magnétique différent circule dans un "circuit froid" vers un échangeur de frigories.

Cette unité de génération de flux thermique 10 peut être couplée à d'autres unités similaires ou non avec lesquelles elle peut être reliée en série et/ou en parallèle et/ou une combinaison série/parallèle.

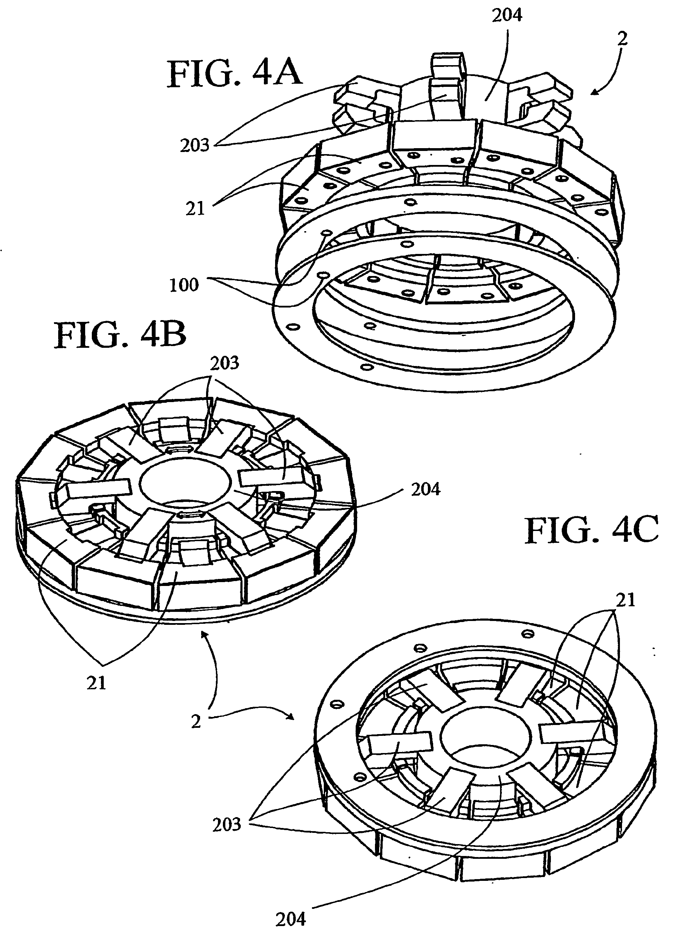

Le dispositif 2, selon un second mode de réalisation et représenté par les figures 4A-C, est sensiblement similaire au précédent. Il s'en différencie par le fait que les organes thermiques 21 sont orientés sensiblement perpendiculairement à l'axe de pivotement de l'anneau 204 et par l'orientation des moyens magnétiques 203 dont leur fente est sensiblement perpendiculaire à ce même axe de pivotement.

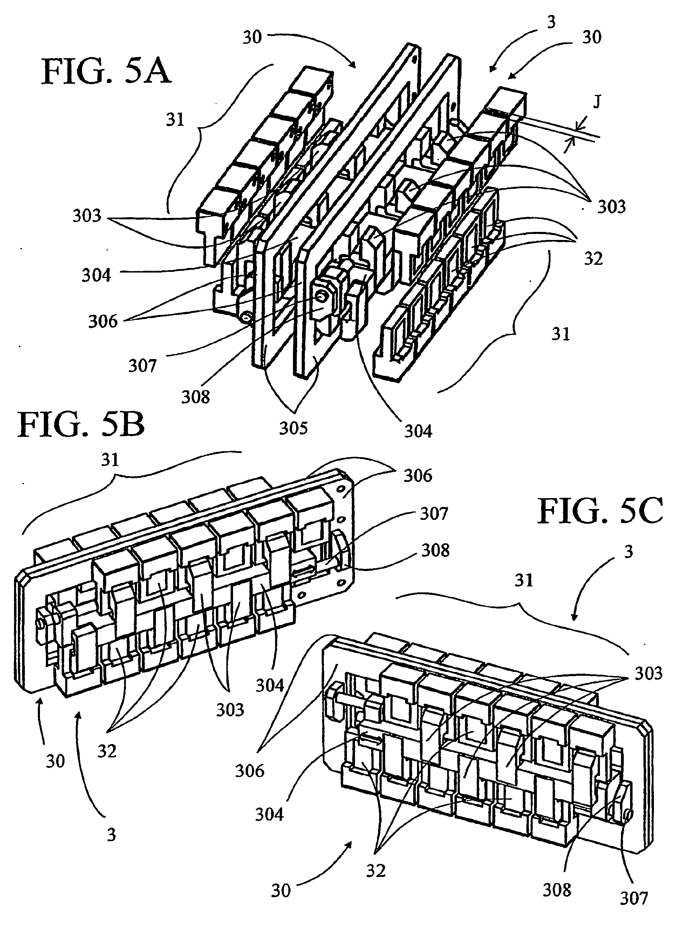

Selon un troisième mode de réalisation représenté par les figures 5A-C, le dispositif 3 comporte deux unités de génération de flux thermique 30 disposées côte à côte et pourvues chacune de douze organes thermiques 31 et de six éléments magnétiques 303. Ce dispositif est représenté aux figures 5B et C en deux positions différentes correspondant à deux étapes de fonctionnement distinctes.

Les organes thermiques 31 sont rectilignes et disposés sensiblement en ligne selon deux rangées superposées. Leur constitution est sensiblement similaire à celle des précédents. Ils sont séparés deux à deux par un espace J. Chaque paire de rangée d'organes thermiques 31 est portée par un cadre 306 sensiblement rectiligne, les rangées étant réparties de part et d'autre de ce cadre sur une traverse 305. Le cadre 306 est réalisé en un matériau thermiquement isolant et mécaniquement rigide. Les cadres 306 sont fixés l'un à l'autre par exemple par vissage, rivetage, clipage, soudure ou tout autre moyen équivalent. Ils peuvent être séparés, entre eux et/ou par rapport aux organes thermiques, par un joint thermique non représenté. Les lignes d'organes thermiques 31 sont respectivement recouvertes par le haut et par le bas par des platines de raccordement sensiblement similaires aux précédentes et non représentées.

Les éléments magnétiques 303 sont sensiblement similaires aux précédents et ont également une forme de U ou de C. Ils sont disposés en quinconce de part et d'autre de deux barres 304 sensiblement rectilignes, prévues chacune entre les deux traverses 305 du cadre 306 correspondant. Ainsi, les éléments magnétiques 303 définissent deux rangées de U ou de C chevauchant chacune une partie des organes thermiques 31. Les barres 304 sont montées mobiles en translation rectiligne alternative sur les cadres 306 et couplées aux moyens d'entraînement alternatifs non représentés. A cet effet, les barres 304 comportent en leurs extrémités des doigts de guidage 307 coulissant de manière alternative dans des oreilles de guidage 308 prévues sur les cadres 306.

Comme pour les modes de réalisation précédents, ces unités de génération de flux thermique 30 peuvent être couplées à d'autres unités similaires ou non, avec lesquelles elles peuvent être reliées en série et/ou en parallèle et/ou une combinaison série/parallèle. On peut ainsi réaliser des étages de températures différenciés.

Selon d'autres variantes de réalisation non représentées, le mouvement alternatif généré par les moyens de déplacement alternatifs pour déplacer les moyens magnétiques peut être un pivotement combiné à une translation tel qu'un mouvement hélicoïdal, une translation circulaire, une translation sinusoïdale ou une translation suivant toute autre trajectoire adaptée.

Le fonctionnement des dispositifs 1-3 précédents est décrit en référence aux figures 6A-B qui schématisent trois étapes du cycle de fonctionnement. En référence à ces figures, le dispositif 4 comporte deux organes thermiques 41a, 41b, un élément magnétique 403 et deux circuits de fluide caloporteur 410a, 410b dont un "circuit chaud" 410a couplé à un échangeur de calories 413a et "un circuit froid" 410b couplé à un échangeur de frigories 413b. La circulation du fluide caloporteur est assurée par les pompes 411a, 411b, par exemple une pompe double, à plusieurs chambres ou à plusieurs étages. Les moyens de commutation 412 permettant de raccorder chaque organe thermique 41a, 41b, à l'un ou l'autre des circuits de fluide caloporteur 410a, 410b, comportent par exemple des vannes, des tiroirs à commande électrique, pneumatique, hydraulique ou tout autre moyen adapté.

Dans l'exemple décrit, le fonctionnement du dispositif 4 peut être décomposé en trois étapes entre lesquelles les moyens de commutation 412 sont mis en oeuvre et le champ magnétique modifié. Dans une autre variante de réalisation non représentée, la circulation du fluide caloporteur est assurée par un circulateur, par thermosiphon ou par tout autre moyen adapté.

Lors de la première étape de démarrage du cycle (Cf. figure 6A partiellement), l'organe thermique 41a est raccordé au "circuit chaud" 410a par l'intermédiaire des moyens de commutation 412. Il est soumis au champ magnétique de l'élément magnétique 403, s'échauffe et transmet ses calories au fluide caloporteur du "circuit chaud" 410a le traversant. Les calories sont transportées par le "circuit chaud" 410a et évacuées par l'échangeur de calories 413a.

Pour passer de la première à la seconde étape, les moyens de commutation 412 sont basculés pour que les organes thermiques 41a, 41b soient respectivement raccordés au "circuit froid" 410b et au "circuit chaud" 410a. De plus, l'élément magnétique 403 est déplacé pour que l'organe thermique 41a ne soit plus soumis à son champ magnétique et que l'organe thermique 41b le soit.

Lors de la seconde étape du cycle (Cf. figure 6B), l'organe thermique 41a qui n'est plus soumis au champ magnétique de l'élément magnétique 403, se refroidit pour atteindre une température inférieure à sa température initiale et transmettre ses frigories au fluide caloporteur du"circuit froid" 410b le traversant. Les frigories sont transportées par le "circuit froid" 410b et évacuées par l'échangeur de frigories 413b qui peut être disposé dans une enceinte froide 414. Par ailleurs, l'organe thermique 41b est soumis au champ magnétique de l'élément magnétique 403, s'échauffe et transmet ses calories au fluide caloporteur du "circuit chaud" 410a le traversant. Les calories sont transportées par le "circuit chaud" 410a et évacuées par l'échangeur de calories 413a.

Pour passer de la seconde à la troisième étape, les moyens de commutation 412 sont basculés pour que les organes thermiques 41a, 41b soient respectivement raccordés au "circuit chaud" 410a et au "circuit froid" 410b. De plus, l'élément magnétique 403 est déplacé pour que l'organe thermique 41b ne soit plus soumis à son champ magnétique et que l'organe thermique 41a le soit.

Lors de la troisième étape du cycle (Cf. figure 6A), l'organe thermique 41a est donc raccordé au "circuit chaud" 410a et l'organe thermique 41b au "circuit froid" 410b par l'intermédiaire des moyens de commutation 412. L' organe thermique 41a est soumis au champ magnétique de l'élément magnétique 403, s'échauffe et transmet ses calories au "circuit chaud" 410a le traversant. Les calories sont transportées par le "circuit chaud" 410a et évacuées par l'échangeur de calories 413a. L' organe thermique 41b, qui n'est plus soumis au champ magnétique de l'élément magnétique 403, se refroidit pour atteindre une température inférieure à sa température de départ et transmet ses frigories au "circuit froid" 410b le traversant. Les frigories sont transportées par le "circuit froid" 410b et évacuées par l'échangeur de frigories 413b qui peut être disposé dans une enceinte froide 414.

Les moyens de commutation 412 basculent et remettent le dispositif 4 dans la configuration de la seconde étape. Le cycle de chauffage/refroidissement peut ainsi être répété sans limite. A chaque cycle, le matériau magnéto-calorique de l'organe thermique 41a, 41b est successivement soumis à des champs magnétiques puis soustrait de ces champs magnétiques. La fréquence du cycle dépend des moyens utilisés et des résultats thermiques à obtenir.

Le basculement des organes thermiques 41a, 41b et des circuits "froid" 410b et "chaud" 410a peut être synchronisé avec le déplacement alternatif du champ magnétique, par exemple par le pivotement d'un angle constant ou le déplacement linéaire d'un pas constant. Le cycle de fonctionnement peut être asservi à une sonde de température installée dans l'enceinte froide 414 ou par exemple à proximité des produits à refroidir.

Dans une variante de réalisation non représentée, le dispositif 4 ne comporte pas de moyen de commutation et le passage d'une étape à l'autre est accompagné par l'inversion du sens de circulation du fluide caloporteur dans un circuit de circulation de fluide caloporteur unique. Cette variante permet de s'affranchir de tout problème d'étanchéité en supprimant les valves.

### Possibilités d'application industrielle :

Ce dispositif 4 permet ainsi de chauffer, refroidir ou tempérer un local, un tunnel agroalimentaire, l'intérieur d'un réfrigérateur, il peut également servir de pompe à chaleur ou pour toute autre application similaire, dans l'industrie ou chez des particuliers. Ce dispositif 4 peut enfin servir pour réguler thermiquement des enceintes de conservation, de séchage ou pour climatiser des locaux.

De manière générale, selon l'invention, les moyens de déplacement alternatifs sont couplés aux moyens magnétiques 103, 203, 303, 403 pour les déplacer alternativement par rapport à l'organe thermique 11, 21, 31, 41a, 41b. De ce fait, l'ensemble des circuits de fluide caloporteur est fixe et la variation de champ magnétique est obtenue par le déplacement alternatif des moyens magnétiques 103, 203, 303, 403 eux-mêmes. Cette construction particulière permet ainsi, de s'affranchir des problèmes d'étanchéité nombreux lorsqu'une partie des circuits 410a, 410b de fluide caloporteur est en mouvement par rapport au reste de ces circuits 410a, 410b.

Cette description met bien en évidence que le dispositif 1-4 selon l'invention permet, tout en réduisant la consommation d'énergie, de générer, sans pollution, des flux thermiques importants pouvant être utilisés pour tout type d'application. Ce dispositif, simple, peut être mis en place et révisé par du personnel sans qualification spécifique. De plus, il a un très faible niveau de bruit lors de son fonctionnement.

Par ailleurs, ce dispositif 1-4 présente l'avantage de ne nécessiter que deux positions de fonctionnement ce qui simplifie sa conception, son fonctionnement et son asservissement. Il est donc moins cher à réaliser et à utiliser que les dispositifs traditionnels.

Les déplacements alternatifs permettent en outre d'obtenir des architectures de dispositif 1-4 autorisant une augmentation aisée et économiquement rentable du nombre d'organes thermiques 11, 21, 31, 41a, 41b et/ou de moyens magnétiques 103, 203, 303, 403, et/ou d'unités de génération de flux thermique 10, 30. Ils permettent également, en combinant plusieurs unités de génération de flux thermique à déplacements alternatifs, d'augmenter les capacités thermiques du dispositif 1-4, de manière fiable, pour un coût modéré et sans compliquer de manière excessive le fonctionnement ou l'architecture du dispositif 1-4.

## Revendications

1. Dispositif de génération de flux thermique à matériau magnéto-calorique (1-4) comportant au moins une unité de génération de flux thermique (10, 30) pourvue d'au moins deux organes thermiques (11, 21, 31, 41a, 41b) contenant chacun au moins un élément magnéto-calorique (12, 22, 32), des moyens magnétiques (103, 203, 303, 403) agencés pour émettre au moins un champ magnétique, des moyens de déplacement couplés aux-dits moyens magnétiques (103, 203, 303, 403) pour les déplacer par rapport aux-dits éléments magnéto-caloriques (12, 22, 32) afin de les soumettre à une variation de champ magnétique de manière à faire varier leur température, des moyens de récupération des calories et/ou frigories émises par lesdits éléments magnéto-caloriques (12, 22, 32), **caractérisé en ce que** lesdits moyens de déplacement sont alternatifs et agencés pour déplacer lesdits moyens magnétiques (103, 203, 303, 403) par rapport aux-dits éléments magnéto-caloriques (12, 22, 32) selon un mouvement alternatif.

2. Dispositif (1-4) selon la revendication 1, **caractérisé en ce que** ledit mouvement alternatif est choisi dans le groupe comprenant au moins un pivotement, un pivotement combiné à une translation, une translation.

3. Dispositif (1-4) selon la revendication 1, **caractérisé en ce que** lesdits moyens de récupération comportent au moins un circuit (410a, 410b) de fluide caloporteur, des moyens de circulation (411a, 411b) dudit fluide caloporteur dans ledit circuit (410a, 410b) et des moyens d'évacuation (413a, 413b) desdites calories et/ou frigories récupérées par ledit fluide caloporteur, ledit circuit (410a, 410b) comportant au moins deux zones de transfert (14) situées chacune dans l'environnement immédiat d'un desdits éléments magnéto-caloriques (12, 22, 32) et agencées pour que ledit fluide caloporteur récupère au moins en partie lesdites calories et/ou lesdites frigories émises par ledit élément magnéto-calorique (12, 22, 32) correspondant.

4. Dispositif (1-4) selon la revendication 3, **caractérisé en ce que** lesdits moyens de récupération comportent des moyens d'inversion du sens de circulation dudit fluide caloporteur dans ledit circuit (410a, 410b) de fluide caloporteur.

5. Dispositif (1-4) selon la revendication 3, **caractérisé en ce que** lesdits moyens de récupération comportent au moins deux circuits (410a, 410b) dont au moins un "circuit chaud" (410a) pour les calories et au moins un "circuit froid" (410b) pour les frigories et des moyens de commutation (412) agencés pour raccorder alternativement chaque zone de transfert (14) à l'un ou à l'autre desdits circuits (410a, 410b).

6. Dispositif (1-4) selon la revendication 5, **caractérisé en ce qu'**il comporte des moyens de synchronisation agencés pour synchroniser lesdits moyens de déplacement alternatifs aux-dits moyens de commutation (412) de sorte que, selon le champ magnétique auquel est soumis chaque élément magnéto-calorique (12, 22, 32), ladite zone de transfert (14) correspondante est reliée à l'un ou à l'autre desdits circuits (410a, 410b).

7. Dispositif (1-4) selon la revendication 1, **caractérisé en ce que** ledit élément magnéto-calorique (12, 22, 32) comporte au moins l'un des matériaux magnéto-calorique choisi dans le groupe comprenant au moins le gadolinium (Gd), un alliage de gadolinium comportant au moins l'un des matériaux choisi dans le groupe comprenant au moins le silicium (Si), le germanium (Ge), le fer (Fe), le magnésium (Mg), le phosphore (P), l'arsenic (As), ledit matériau magnéto-calorique se présentant sous l'une des formes choisie dans le groupe comprenant un bloc, une pastille, de la poudre, un agglomérat de morceaux.

8. Dispositif (1-4) selon la revendication 1, **caractérisé en ce que** chaque organe thermique (11, 21, 31, 41a, 41b) est au moins en partie réalisé dans un matériau conducteur choisi pour sa bonne conduction thermique et choisi dans le groupe comprenant au moins le cuivre, les alliages de cuivre, l'aluminium et les alliages d'aluminium, les aciers et les alliages d'acier, les inoxydables et les alliages d'inoxydables.

9. Dispositif (1-4) selon la revendication 1, **caractérisé en ce que** ledit organe thermique (11, 21, 31, 41a, 41b) comporte au moins un conduit traversant pourvu d'au moins un orifice d'entrée (16) et d'au moins un orifice de sortie (17) raccordés audit circuit (410a, 410b), ledit conduit traversant définissant ladite zone de transfert (14) correspondante.

10. Dispositif (1-4) selon la revendication 1, **caractérisé en ce que** ledit organe thermique (11, 21, 31, 41a, 41b) comporte un conduit traversant unique pourvu d'un orifice d'entrée (16) unique et d'un orifice de sortie (17) unique raccordés audit circuit (410a, 410b), ledit conduit traversant définissant ladite zone de transfert (14) correspondante.

11. Dispositif (1-4) selon la revendication 1, **caractérisé en ce que** lesdits moyens magnétiques comportent au moins un élément magnétique (103, 203, 303, 403) pourvu d'au moins un aimant permanent ou un électro-aimant ou un supraconducteur.

12. Dispositif (1-4) selon la revendication 11, **caractérisé en ce que** ledit élément magnétique (103, 203, 303, 403) comporte au moins un matériau magnétisable agencé pour concentrer et diriger les lignes de champ dudit aimant permanent et choisi dans le groupe comprenant au moins le fer (Fe), le cobalt (Co), le Vanadium (V), le fer doux, un assemblage de ces matériaux.

13. Dispositif (1-4) selon la revendication 11, **caractérisé en ce que** ledit élément magnétique (103, 203, 303, 403) a une forme en U ou en C agencée pour recevoir entre ses branches et de manière alternative ledit élément magnéto-calorique (12, 22, 32).

14. Dispositif (1-4) selon la revendication 11, **caractérisé en ce que** lesdits organes thermiques (11, 21, 31, 41a, 41b) sont indépendants et séparés par au moins un élément thermiquement isolant choisi dans le groupe comprenant au moins un espace, un matériau isolant.

15. Dispositif (1-4) selon la revendication 1, **caractérisé en ce qu'**il comporte plusieurs éléments magnétiques (103, 203, 303, 403) portés par au moins un support (104, 304) couplé aux-dits moyens de déplacement alternatifs.

16. Dispositif (1, 2) selon la revendication 15 , **caractérisé en ce que** ledit support est sensiblement circulaire et définit au moins un anneau (104) monté pivotant alternativement sur son axe, ledit anneau portant radialement les moyens magnétiques (103, 203) et **en ce que** lesdits organes thermiques (11, 21) définissent des secteurs circulaires disposés sensiblement en cercle de manière consécutive pour pouvoir être chevauchés librement par lesdits moyens magnétiques (103, 203).

17. Dispositif (1) selon la revendication 16, **caractérisé en ce que** lesdits moyens magnétiques (103) sont orientés de manière à ce que les fentes desdites formes en U ou en C soient sensiblement parallèles à l'axe de pivotement dudit anneau (104) et **en ce que** lesdits organes thermiques (11) sont orientés sensiblement parallèlement à l'axe de pivotement dudit anneau (104).

18. Dispositif (2) selon la revendication 16, **caractérisé en ce que** lesdits moyens magnétiques (203) sont orientés de manière à ce que les fentes desdites formes en U ou en C soient sensiblement perpendiculaires à l'axe de pivotement dudit anneau (204) et **en ce que** lesdits organes thermiques (21) sont orientés sensiblement perpendiculairement à l'axe de pivotement dudit anneau (204).

19. Dispositif (3) selon la revendication 15, **caractérisé en ce que** ledit support est sensiblement rectiligne et définit au moins une barre (304) mobile en translation rectiligne alternative, ladite barre (304) portant lesdits moyens magnétiques (303) et **en ce que** lesdits organes thermiques (31) sont portés par au moins un cadre (306) entourant ladite barre (304) et disposés sensiblement en ligne pour être chevauchés librement par lesdits moyens magnétiques (303).

20. Dispositif (3) selon la revendication 19, **caractérisé en ce que** lesdits moyens magnétiques (303) sont disposés en quinconce de part et d'autre de ladite barre (304) pour définir deux rangées et **en ce que** ledit cadre (306) comporte deux séries d'organes thermiques (31) dont chacune correspond à des moyens magnétiques (303) d'une desdites rangées.

21. Dispositif (1-4) selon la revendication 1, **caractérisé en ce qu'**au moins une partie desdits organes thermiques (11, 21, 31, 41a, 41b) est portée par au moins une platine (18, 28) comportant des orifices de communication (100) pour le passage dudit fluide caloporteur vers ledit circuit (410a, 410b).

22. Dispositif (1-4) selon la revendication 3, **caractérisé en ce que** lesdits moyens de circulation sont choisis dans le groupe comprenant au moins une pompe (411a, 411b), un circulateur, un thermosiphon.

23. Dispositif (1-4) selon la revendication 4, **caractérisé en ce que** lesdits moyens d'évacuation comportent au moins deux échangeurs dont au moins un échangeur de calories (413a) relié au "circuit chaud" (410a) et au moins un échangeur de frigories (413b) relié au "circuit froid" (410b).

24. Dispositif (1-4) selon la revendication 1, **caractérisé en ce que** lesdits moyens d'entraînement alternatifs sont choisis dans le groupe comprenant au moins un moteur, un vérin, un mécanisme à ressort, un aérogénérateur, un électroaimant, un hydrogénérateur.

25. Dispositif (1-4) selon la revendication 1, **caractérisé en ce qu'**il comporte plusieurs unités de génération de flux thermique raccordées en série, en parallèle ou selon une combinaison série-parallèle.

## Claims

1. Device for generating a thermal flux with magneto-caloric material (1-4), comprizing at least one thermal flux generation unit (10, 30) provided with at least two thermal bodies (11, 21, 31, 41a, 41b) each containing at least one magneto-caloric element (12, 22, 32), magnetic means (103, 203, 303, 403) arranged to emit at least one magnetic field, displacement means coupled to the said magnetic means (103, 203, 303, 403) to move them relative to the said magneto-caloric elements (12, 22, 32) so as to subject the latter to a magnetic field variation in such manner as to vary their temperature, and means for the recuperation of the calories and/or frigories emitted by the said magneto-caloric elements (12, 22, 32), **characterized in that** the said displacement means reciprocate and are arranged to move the said magnetic means (103, 203, 303, 403) relative to the said magneto-caloric elements (12, 22, 32) in a reciprocating motion.

2. Device (1-4) according to Claim 1, **characterized in that** the said reciprocating movement is chosen from the group that includes at least pivoting, pivoting combined with translation, and translation.

3. Device (1-4) according to Claim 1, **characterized in that** the said recuperation means comprize at least one heat transfer fluid circuit (410a, 410b), means (411a, 411b) for circulating said heat transfer fluid in said circuit (410a, 410b) and means (413a, 413b) for extracting said calories and/or frigories recovered by said heat transfer fluid, the said circuit (410a, 410b) comprizing at least two transfer zones (14) each located immediately adjacent to one of said magneto-caloric elements (12, 22, 32) and arranged so that said heat transfer fluid recovers, at least in part, said calories and/or frigories emitted by the said corresponding magneto-caloric element (12, 22, 32).

4. Device (1-4) according to Claim 3, **characterized in that** the said recuperation means comprize means for reversing the circulation direction of said heat transfer fluid in said heat transfer fluid circuit (410a, 410b).

5. Device (1-4) according to Claim 3, **characterized in that** the said recuperation means comprize at least two circuits (410a, 410b), at least one being a "hot circuit" (410a) for the calories and at least one being a "cold circuit" (410b) for the frigories, and commutation means (412) arranged so as to connect each transfer zone (14) in alternation to one or other of said circuits (410a, 410b).

6. Device (1-4) according to Claim 5, **characterized in that** it comprizes synchronization means arranged to synchronize the said reciprocating displacement means with said commutation means (412) in such manner that, depending on the magnetic field to which each magneto-caloric element (12, 22, 32) is subjected, said corresponding transfer zone (14) is connected to one or other of said circuits (410a, 410b).

7. Device (1-4) according to Claim 1, **characterized in that** the said magneto-caloric element (12, 22, 32) comprizes at least one magneto-caloric material chosen from the group that includes at least gadolinium (Gd), a gadolinium alloy containing at least one material chosen from the group that includes silicon (Si), germanium (Ge), iron (Fe), magnesium (Mg), phosphorus (P) and arsenic (As), said magneto-caloric material being in one of the forms chosen from the group that includes a block, a pastille, powder or an agglomerate of pieces.

8. Device (1-4) according to Claim 1, **characterized in that** each thermal body (11, 21, 31, 41a, 41b) is made at least in part from a conductive material selected for its good thermal conductivity and chosen from the group that includes at least copper and its alloys, aluminum and its alloys, steels and steel alloys, stainless metals and alloys thereof.

9. Device (1-4) according to Claim 1, **characterized in that** said thermal body (11, 21, 31, 41a, 41b) comprizes at least one through-channel provided with at least one inlet orifice (16) and at least one outlet orifice (17) connected to said circuit (410a, 410b), said through-channel constituting the said corresponding transfer zone (14).

10. Device (1-4) according to Claim 1, **characterized in that** the said thermal body (11, 21, 31, 41a, 41b) comprizes a single through-channel provided with a single inlet orifice (16) and a single outlet orifice (17) connected to said circuit (410a, 410b), said through-channel constituting the said corresponding transfer zone (14).

11. Device (1-4) according to Claim I, **characterized in that** said magnetic means comprize at least one magnetic element (103, 203, 303, 403) provided with at least one permanent magnet or an electromagnet or a superconductor.

12. Device (1-4) according to Claim 11, **characterized in that** the said magnetic element (103, 203, 303, 403) comprizes at least one magnetizable material arranged to concentrate and direct the field lines of said permanent magnet, and chosen from the group that includes iron (Fe), cobalt (Co), vanadium (V), soft iron, or a combination of those materials.

13. Device (1-4) according to Claim 11, **characterized in that** the said magnetic element (103, 203, 303, 403) has the shape of a U or C arranged to receive said magneto-caloric element (12, 22, 32) between its arms and in alternation.

14. Device (1-4) according to Claim 11, **characterized in that** the said thermal bodies (11, 21, 31, 41a, 41b) are independent and are separated by at least one thermally insulating element chosen from the group that includes at least a space or an insulating material.

15. Device (1-4) according to Claim 1, **characterized in that** it comprizes a plurality of magnetic elements (103, 203, 303, 403) carried by at least one support (104, 304) coupled to said reciprocating displacement means.

16. Device (1, 2) according to Claim 15, **characterized in that** said support is essentially circular and constitutes at least one ring (104) mounted to pivot in reciprocation about its axis, said ring carrying the magnetic means (103, 203) radially, and **in that** the said thermal bodies (11, 21) define circular sectors arranged in sequence essentially in a circle to be able to be straddled freely by said magnetic means (103, 203).

17. Device (1) according to Claim 16, **characterized in that** the said magnetic means (103) are orientated so that the gaps of the said U or C shapes are essentially parallel to said ring (104), and **in that** the said thermal bodies (11) are orientated essentially parallel to the pivoting axis ofsaid ring (104).

18. Device (2) according to Claim 16, **characterized in that** the said magnetic means (203) are orientated so that the gaps of the said U or C shapes are essentially perpendicular to the pivoting axis of said ring (204), and **in that** the said thermal bodies (21) are orientated essentially perpendicularly to the pivoting axis of said ring (204).

19. Device (3) according to Claim 15, **characterized in that** the said support is essentially rectilinear and defines at least one bar (304) that moves in reciprocating rectilinear translation, said bar (304) carrying said magnetic means (303), and **in that** the said thermal bodies (31) are carried by at least one frame (306) positioned around the said bar (304) and are arranged essentially in line so that they can be straddled freely by said magnetic means (303).

20. Device (3) according to Claim 19, **characterized in that** the said magnetic means (303) are positioned in a staggered arrangement on either side of said bar (304) forming two rows, and **in that** the said frame (306) comprizes two series of thermal bodies (31) each of which corresponds to the magnetic means (303) of one of the said rows.

21. Device (1-4) according to Claim 1, **characterized in that** at least part of the said thermal bodies (11, 21, 31, 41a, 41b) is carried by at least one plate (18, 28), which comprizes communication orifices (100) to allow passage of said heat transfer fluid to said circuit (410a, 410b).

22. Device (1-4) according to Claim 3, **characterized in that** the said circulation means are chosen from the group that includes at least a pump (411a, 411b), a circulator or a thermosiphon.

23. Device (1-4) according to Claim 4, **characterized in that** the said extraction means comprize at least two exchangers, of which at least one is a calorie exchanger (413a) connected to the "hot circuit" (410a) and at least one is a frigorie exchanger (413b) connected to the "cold circuit" (410b).

24. Device (1-4) according to Claim 1, **characterized in that** the said reciprocating drive means are chosen from the group that includes at least a motor, a jack, a spring mechanism, an aerogenerator, an electromagnet or a hydrogenerator.

25. Device (1-4) according to Claim 1, **characterized in that** it comprizes a plurality of thermal flux generation units connected in series, in parallel or in a series-parallel combination.

## Patentansprüche

1. Vorrichtung zur Erzeugung eines Wärmestromes von magnetokalorischem Werkstoff (1-4), die mindestens eine Einheit zur Erzeugung eines Wärmestromes (10,30), die mit mindestens zwei Thermoelementen (11,21,31,41a,41b) versehen ist, die jeweils mindestens ein magnetokalorisches Element (12,22,32), Magneteinrichtungen (103,203,303,403), die angeordnet sind, um mindestens ein Magnetfeld abzugeben, Verlagerungseinrichtungen, die mit den Magneteinrichtungen (103,203,303,403) verbunden sind, um sie im Verhältnis zu den magnetokalorischen Elementen (12,22,32) zu verlagern, um sie einer Magnetfeldveränderung auszusetzen, um sie zur Veränderung ihrer Temperatur zu veranlassen, und Einrichtungen zur Rückgewinnung von Kalorien und/oder von Kälte, die von den magnetokalorischen Elementen (12,22,32) ausgegeben wird, umfasst, **dadurch gekennzeichnet, dass** die Verlagerungseinrichtungen sich hin- und herbewegend sind und zur Verlagerung der Magneteinrichtungen (103,203,303,403) im Verhältnis zu den magnetokalorischen Elementen (12,22,32) entsprechend einer Hin- und Herbewegung angeordnet sind.

2. Vorrichtung (1-4) nach Anspruch 1, **dadurch gekennzeichnet, dass** die Hin- und Herbewegung aus der Gruppe ausgewählt wird, die mindestens eine Schwenkbewegung, eine mit einer Translation kombinierte Schwenkbewegung und eine Translation umfasst.

3. Vorrichtung (1-4) nach Anspruch 1, **dadurch gekennzeichnet, dass** die Rückgewinnungseinrichtungen mindestens einen Kreislauf (410a,410b) für Wärmeübertragungsfluid, Einrichtungen zur Zirkulation (411a,411b) des Wärmeübertragungsfluids in dem Kreislauf (410a,410b) und Einrichtungen (413a,413b) zum Ausstoß der Kalorien und/oder Kälte umfassen, die durch das Wärmeübertragungsfluid gesammelt wurden, wobei der Kreislauf (410a,410b) mindestens zwei Übertragungszonen (14) umfasst, die jeweils in der unmittelbaren Umgebung der magnetokalorischen Elemente (12,22,32) positioniert und so angeordnet sind, dass das Wärmeübertragungsfluid mindestens teilweise die Kalorien und/oder die Kälte zurückgewinnt, die von dem entsprechenden magnetokalorischen Element (12,22,32) abgegeben wurden.

4. Vorrichtung (1-4) nach Anspruch 3, **dadurch gekennzeichnet, dass** die Rückgewinnungseinrichtungen Einrichtungen zur Umkehrung der Zirkulationsrichtung des Wärmeübertragungsfluids in dem Kreislauf (410a,410b) von Wärmeübertragungsfluid umfassen.

5. Vorrichtung (1-4) nach Anspruch 3, **dadurch gekennzeichnet, dass** die Rückgewinnungseinrichtungen mindestens zwei Kreisläufe (410a,410b), davon mindestens einen "warmen Kreislauf" (410a) für die Kalorien, und mindestens einen "kalten Kreislauf" (410b) für die Kälte, und Schalteinrichtungen (412) umfassen, die angeordnet sind, um jede Übertragungszone (14) alternativ mit einem oder dem anderen der Kreisläufe (410a,410b) zu verbinden.

6. Vorrichtung (1-4) nach Anspruch 5, **dadurch gekennzeichnet, dass** sie Synchronisationseinrichtungen umfasst, die zur Synchronisation der Hin- und Herverlagerungseinrichtungen mit den Schalteinrichtungen (412) angeordnet sind, so dass entsprechend dem Magnetfeld, zu dem das magnetokalorische Element (12,22,32) übertragen wird, die entsprechende Übertragungszone (14) mit einem oder einem anderen der Kreisläufe (410a,410b) verbunden ist.

7. Vorrichtung (1-4) nach Anspruch 1, **dadurch gekennzeichnet, dass** das magnetokalorische Element (12,22,32) mindestens einen der magnetokalorischen Werkstoffe umfasst, der aus der Gruppe ausgewählt wird, die mindestens das Gadolinium (Gd) umfasst, eine Gadoliniumlegierung, die mindestens einen der Werkstoffe umfasst, der aus der Gruppe ausgewählt ist, die mindestens Silizium (Si), Germanium (Ge), Eisen (Fe), Magnesium (Mg), Phosphor (P), Arsen (As) umfasst, wobei der magnetokalorische Werkstoff eine der Formen aufweist, die aus der Gruppe ausgewählt wird, die einen Block, eine Pastille, ein Pulver und ein Agglomerat aus Stücken umfasst.

8. Vorrichtung (1-4) nach Anspruch 1, **dadurch gekennzeichnet, dass** jedes Thermoelement (11,21,31,41a,41b) mindestens teilweise aus einem leitenden Werkstoff ausgewählt ist, der auf Grund seiner guten Wärmeleitung ausgewählt wird, und der aus der Gruppe ausgewählt wird, die mindestens Kupfer, Kupferlegierungen, Aluminium und Aluminiumlegierungen, Stähle und Stahllegierungen, nichtrostende Elemente und Legierungen nichtrostender Elemente umfasst.

9. Vorrichtung (1-4) nach Anspruch 1, **dadurch gekennzeichnet, dass** das Thermoelement (11,21,31,41a,41b) mindestens einen Durchgangskanal umfasst, der mit mindestens einer Eingangsöffnung (16), und mit mindestens einer Ausgangsöffnung (17) versehen ist, die mit dem Kreislauf (410a,410b) verbunden ist, wobei der Durchgangskanal die entsprechende Übertragungszone (14) festlegt.

10. Vorrichtung (1-4) nach Anspruch 1, **dadurch gekennzeichnet, dass** das Thermoelement (11,21,31,41a,41b) einen einzigen Durchgangskanal umfasst, der mit einer Eingangsöffnung (16) und mit einer Ausgangsöffnung (17) versehen ist, die mit dem Kreislauf (410a,410b) verbunden sind, wobei der Durchgangskanal die entsprechende Übertragungszone (14) festlegt.

11. Vorrichtung (1-4) nach Anspruch 1, **dadurch gekennzeichnet, dass** die Magneteinrichtungen mindestens ein Magnetelement (103,203,303,403) umfassen, welches mit mindestens einem Dauermagneten oder einem Elektromagneten oder einem Supraleiter versehen ist.

12. Vorrichtung (1-4) nach Anspruch 11, **dadurch gekennzeichnet, dass** das Magnetelement (103,203,303,403) mindestens einen magnetisierbaren Werkstoff umfasst, der angeordnet ist, um die Feldlinien des Dauermagneten zu konzentrieren und auszurichten, der aus der Gruppe ausgewählt wird, die mindestens Eisen (Fe), Kobalt (Co), Vanadium (V), Weicheisen, eine Verbindung dieser Werkstoffe umfasst.

13. Vorrichtung (1-4) nach Anspruch 11, **dadurch gekennzeichnet, dass** das Magnetelement (103,203,303,403) eine U-Form oder C-Form aufweist, die zur alternativen Aufnahme des magnetokalorischen Elementes (12,22,32) zwischen seinen Schenkeln in der Lage ist.

14. Vorrichtung (1-4) nach Anspruch 11, **dadurch gekennzeichnet, dass** die Thermoelemente (11,21,31,41a,41b) unabhängig und durch mindestens ein thermisch isolierendes Element getrennt sind, welches aus der Gruppe ausgewählt wird, die mindestens einen Raum und einen Isolationswerkstoff umfasst.

15. Vorrichtung (1-4) nach Anspruch 1, **dadurch gekennzeichnet, dass** sie mehrere Magnetelemente (103,203,303,403) umfasst, die durch mindestens einen Träger (104,304) getragen werden, der mit den Hin- und Herverlagerungseinrichtungen verbunden ist.

16. Vorrichtung (1,2) nach Anspruch 15, **dadurch gekennzeichnet, dass** der Träger praktisch kreisförmig ist und mindestens einen Ring (104) festlegt, der sich auf seiner Achse hin- und herbewegend angebracht ist, wobei der Ring radial die Magneteinrichtungen (103,203) trägt, und wobei die Thermoelemente (11,21) praktisch kreisförmig angeordnete Kreissektoren aufeinanderfolgend festlegen, um durch die Magneteinrichtungen (103,203) praktisch frei überlappt werden zu können.

17. Vorrichtung (1) nach Anspruch 16, **dadurch gekennzeichnet, dass** die Magneteinrichtungen (103) so ausgerichtet sind, dass die Schlitze in U- oder C-Form praktisch parallel zu der Schwenkachse des Ringes (104) verlaufen, wobei die Thermoelemente (11) praktisch parallel zu der Schwenkachse des Ringes (104) ausgerichtet sind.

18. Vorrichtung (2) nach Anspruch 16, **dadurch gekennzeichnet, dass** die Magneteinrichtungen (203) so ausgerichtet sind, dass die Schlitze in U- oder C-Form praktisch senkrecht zu der Schwenkachse des Ringes (204) verlaufen, wobei die Thermoelemente (21) praktisch parallel zu der Schwenkachse des Ringes (204) ausgerichtet sind.

19. Vorrichtung (3) nach Anspruch 15, **dadurch gekennzeichnet, dass** der Träger praktisch geradlinig ist und mindestens einen geradlinig in Form einer Translation hin- und herbewegbaren Stab (304) festlegt, wobei der Stab (304) die Magneteinrichtungen (303) trägt, und die Thermoelemente (31) durch mindestens einen Rahmen (306) getragen werden, der den Stab (304) umgibt, und die praktisch in Reihe angeordnet sind, um durch die Magneteinrichtungen (303) praktisch frei überlappt werden zu können.

20. Vorrichtung (3) nach Anspruch 19, **dadurch gekennzeichnet, dass** die Magneteinrichtungen (303) zickzackförmig beiderseits des Stabes (304) angeordnet sind, um zwei Reihen festzulegen, wobei der Rahmen (306) zwei Reihen von Thermoelementen (31) umfasst, wovon jedes Magneteinrichtungen (303) einer der Reihen entspricht.

21. Vorrichtung (1-4) nach Anspruch 1, **dadurch gekennzeichnet, dass** ein Teil der Thermoelemente (11,21,31,41a,41b) durch mindestens eine Platte (18,28) getragen wird, die Verbindungsöffnungen (100) zum Durchgang des Wärmeübertragungsfluids zu dem Kreislauf (410a,410b) umfasst.

22. Vorrichtung (1-4) nach Anspruch 3, **dadurch gekennzeichnet, dass** die Zirkulationseinrichtungen aus der Gruppe ausgewählt werden, die mindestens eine Pumpe (411a,411b), eine Umlaufpumpe und einen Thermosiphon umfasst.

23. Vorrichtung (1-4) nach Anspruch 4, **dadurch gekennzeichnet, dass** die Ausstoßeinrichtungen mindestens zwei Tauschelemente umfassen, wovon mindestens ein Kalorientauscher (413a) mit dem "warmen Kreislauf" (410a) verbunden ist, und mindestens ein Tauschelement für Kälte (413b) mit dem "kalten Kreislauf" (410b) verbunden ist.

24. Vorrichtung (1-4) nach Anspruch 1, **dadurch gekennzeichnet, dass** die Hin- und Herbewegungsantriebseinrichtungen aus der Gruppe ausgewählt werden, die mindestens einen Motor, einen Kolben, einen Federmechanismus, eine Windkraftmaschine, einen Elektromagneten und eine Wasserkraftmaschine umfasst.

25. Vorrichtung (1-4) nach Anspruch 1, **dadurch gekennzeichnet, dass** sie mehrere Einheiten zur Erzeugung eines Wärmestromes umfasst, die in Reihe, parallel oder gemäß einer reihenparallelen Kombination verbunden sind.
